# EUROPÄISCHE PATENTSCHRIFT

(11) **EP 1 645 366 B1**
(45) Veröffentlichungstag und Bekanntmachung des Hinweises auf die Patenterteilung: **20.08.2008**
(21) Anmeldenummer: 04024135.8
(22) Anmeldetag: 09.10.2004
(51) Int. Cl.: B25B 5/06

(54) **Spannvorrichtung**
Clamping device
Dispositif de serrage

(43) Veröffentlichungstag der Anmeldung: 12.04.2006
(73) Patentinhaber: Staudinger Forschungs- und Entwicklungs GmbH & Co. KG, 86165 Augsburg (DE)
(72) Erfinder: Staudinger, Karl, 86316 Friedberg (DE)
(74) Vertreter: Schwarz, Thomas

(56) Entgegenhaltungen:
- EP-A- 1 055 474
- WO-A-96/35547
- WO-A-03/041913
- DE-U1- 20 100 701
- FR-A- 2 779 369
- GB-A- 265 626

## Beschreibung

Die Erfindung betrifft eine Spannvorrichtung zur lagegenauen Anordnung und zum Festspannen eines Werkstücks auf einer Werkstückauflage nach dem Oberbegriff des Anspruchs 1.

Eine solche Spannvorrichtung ist beispielsweise aus der Druckschrift EP 1 055 474 bekannt.

Eine derartige Spannvorrichtung wird z.B. in Aufspanneinrichtungen für die Schweißbearbeitung eingesetzt. Dort ist einerseits eine gute Zugänglichkeit zum Werkstück und andererseits eine genaue Positionierung und sichere Halterung der Werkstücke gefordert, um wiederholgenaue und präzise Schweißarbeiten mit den üblicherweise verwendeten Schweißrobotern zu ermöglichen. Zur lagegenauen Fixierung der Werkstücke innerhalb der Aufspanneinrichtung sind in der Regel gesonderte Positionierelemente oder Aufnahmeeinrichtungen vorgesehen, die eine exakte Ausrichtung der Werkstücke innerhalb der Aufspanneinrichtung ermöglichen. Da jedoch besonders bei der Schweißbearbeitung durch die Wärmeeinwirkung bedingte Spannungen innerhalb der Werkstücke auftreten können, ergibt sich oftmals die Problematik, dass sich die Werkstücke innerhalb der Aufspanneinrichtung verklemmen oder verkeilen. Das kann zu Beschädigungen der Werkstücke führen oder deren Entnahme aus der Aufspanneinrichtung erschweren. Dies ist besonders für eine automatisierte Fertigung nachteilig.

Aufgabe der Erfindung ist es, eine Spannvorrichtung der eingangs genannten Art zu schaffen, die nicht nur eine sichere und genaue Halterung der Werkstücke während einer Bearbeitung, sondern auch deren einfache Entnahme aus der Spannvorrichtung nach der Bearbeitung ermöglicht.

Diese Aufgabe wird durch eine Spannvorrichtung mit den Merkmalen des Anspruchs 1 gelöst. Zweckmäßige Ausgestaltungen und vorteilhafte Weiterbildungen der Erfindung sind Gegenstand der Unteransprüche.

Ein wesentlicher Vorteil der erfindungsgemäßen Spannvorrichtung besteht darin, dass durch einen gemeinsamen Linearantrieb nicht nur das eigentliche Spannelement zum Festspannen eines Werkstücks auf einer Auflage, sondern auch ein gesondertes Aufnahme- oder Halteelement zur genauen Positionierung des Werkstücks betätigt wird. Bei der Bewegung des Spannelements aus seiner Offenstellung in eine Spannstellung wird gleichzeitig das Aufnahmeelement aus einer Einlegestellung in eine Haltestellung bewegt. Das Werkstück wird somit positioniert und in der gewünschten Stellung gehalten. Wenn das Spannelement zum Öffnen der Spannvorrichtung wieder in die Offenstellung zurück bewegt wird, gelangt auch gleichzeitig das Aufnahmeelement wieder in seine Einlegestellung, in der das Werkstück ohne weiteres entnommen werden.

Bei der Erfindung erfolgt der Antrieb des als verschwenkbarer Spannarm ausgeführten Spannelements über ein Hebelgetriebe, das ein durch den Linearantrieb verschiebbares erstes Gabelstück und ein an der Außenseite des Gehäuses verschwenkbar angelenktes zweites Gabelstück enthält, die durch einen Gelenkhebel gelenkig miteinander verbunden sind, wobei der Spannarm an dem zweiten Gabelstück befestigt ist.

Der Linearantrieb ist in vorteilhafter Weise als druckmittelbetätigter Zylinder, vorzugsweise Pneumatikzylinder, mit einer beidseitigen Kolbenstange ausgeführt. Das eine Ende der Kolbenstange ist mit dem Hebelgetriebe zur Betätigung des Spannarms und dem Aufnahmestift verbunden. Am anderen Ende der Kolbenstange ist ein Handhebel zur manuellen Verschiebung der Kolbenstange angelenkt. Dadurch kann die Spannvorrichtung von Hand in ihre Spannstellung gebracht werden, bevor der Pneumatikzylinder zur Erzeugung der eigentlichen Spannkraft beaufschlagt wird.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine in einer Einlegeposition befindliche Spannvorrichtung in einem Teilschnitt;
- **Figur 2**: die in Figur 1 gezeigte Spannvorrichtung in einer Spannstellung und
- **Figur 3**: eine Seitenansicht der Spannvorrichtung in Richtung des Pfeils A von Figur 1.

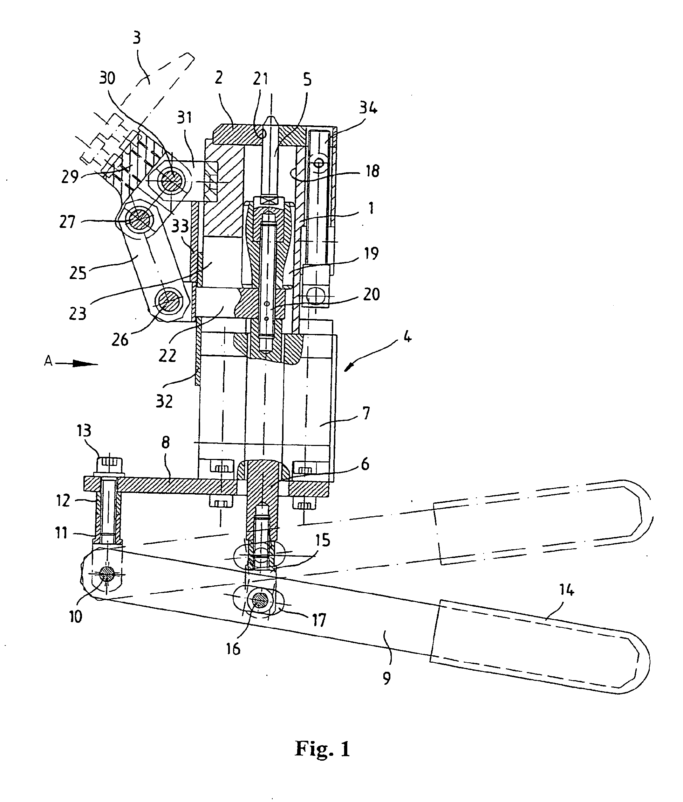

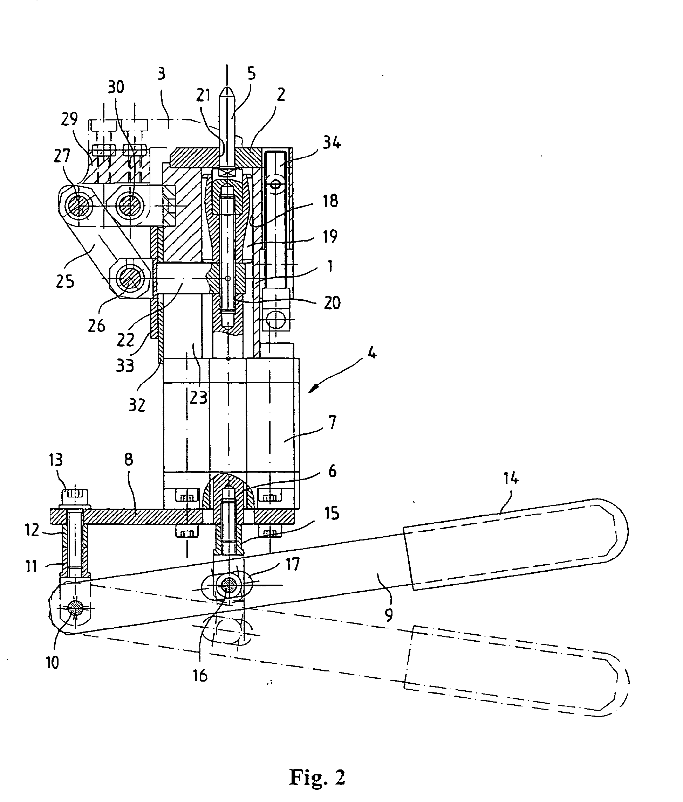

Die in den Figuren 1 bis 3 dargestellte Spannvorrichtung enthält ein Gehäuse 1 mit einer auf dessen Oberseite befestigten plattenförmigen Werkstückauflage 2, einen an der Seite des Gehäuses 1 verschwenkbar angelenkten Spannarm 3 und einen an der Unterseite des Gehäuses 1 montierten Linearantrieb 4, durch den der strichpunktiert dargestellte Spannarm 3 zwischen einer in Figur 1 gezeigten Offenstellung zum Einlegen bzw. Entnehmen eines Werkstücks und einer in Figur 2 dargestellten Spannstellung zum Festspannen eines Werkstücks auf der Werkstückauflage 2 verschwenkt werden kann. In dem Gehäuse 1 ist ferner ein durch die Werkstückauflage 2 ragender Aufnahmestift 5 axial verschiebbar geführt und mit dem Linearantrieb 4 derart verbunden, dass beim Verschwenken des Spannarms 3 aus seiner Offenstellung in die Spannstellung gleichzeitig der Aufnahmestift 5 aus einer eingefahrenen Einlegestellung in eine ausgefahrenen Haltestellung bewegt wird. Wird der Spannarm 3 durch den Linearantrieb 4 aus der Spannstellung in die Offenstellung zurück verschwenkt, wird auch gleichzeitig der Aufnahmestift 5 aus seiner ausgefahrenen Haltestellung wieder in seine eingefahrene Einlegestellung verschoben.

Der Linearantrieb 4 ist bei dem gezeigten Ausführungsbeispiel als Pneumatikzylinder mit einer durchgehenden beidseitigen Kolbenstange 6 ausgeführt. Die Kolbenstange 6 mit dem nicht dargestellten Ringkolben ist in einem an der Unterseite des Gehäuses 1 befestigten Zylindergehäuse 7 angeordnet. An der Unterseite des Zylindergehäuses 7 ist eine Platte 8 zur Halterung eines Handhebels 9 befestigt, durch den die Kolbenstange 6 manuell betätigt werden kann. Der Handhebel 9 ist mit seinem einen Ende über einen ersten Gelenkstift 10 an einem zur Mittelachse der Kolbenstange 6 seitlich versetzten ersten Gabelkopf 11 angelenkt, der über eine Distanzhülse 12 und eine Halteschraube 13 nach unten vorstehend an der Platte 8 festgeschraubt ist. An dem anderen freien Ende des Handhebels 9 ist ein Handgriff 14 vorgesehen. An dem nach unten vorstehenden Ende der Kolbenstange 6 ist ein zweiter Gabelkopf 15 befestigt, der über einen zweiten Gelenkstift 16 und ein Langloch 17 in dem Handhebel 9 mit diesem gelenkig verbunden ist.

Innerhalb des Gehäuses 1 ist eine zentrale Führungsbohrung 18 vorgesehen, in der ein zur Kolbenstange 6 koaxialer Führungsbolzen 19 axial verschiebbar geführt ist. Dieser Führungsbolzen 19 ist mit der Kolbenstange 6 über eine Gewindestange 20 verbunden und trägt an seinem oberen Ende den Aufnahmestift 5, der durch eine Bohrung 21 der plattenförmigen Werkstückauflage 2 ragt. Der Aufnahmestift 5 ist mit dem Führungsbolzen 19 ebenfalls über die Gewindestange 20 verschraubt. Zwischen dem Führungsbolzen 19 und der Kolbenstange 6 wird ein erstes Gabelstück 22 gehalten, das durch eine seitliche Aussparung 23 des Gehäuses 1 ragt.

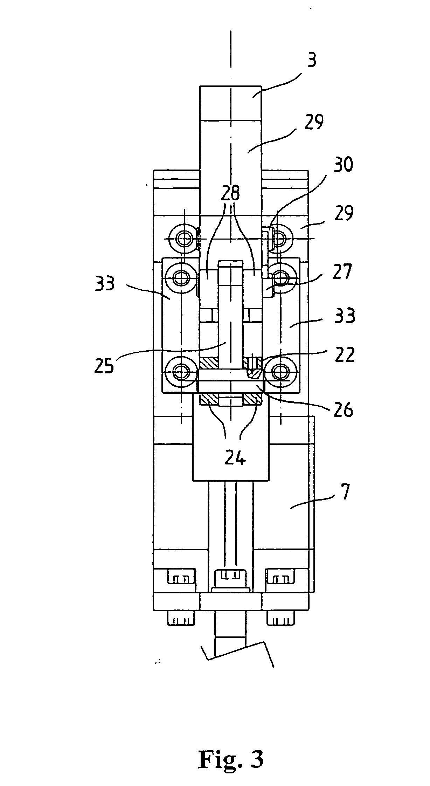

Wie aus Figur 3 hervorgeht, enthält der nach außen vorstehende Teil des ersten Gabelstücks 22 zwei voneinander beabstandete Schenkel 24, zwischen denen das eine Ende eines Gelenkhebels 25 über einen ersten Querstift 26 angelenkt ist. Das andere Ende des Gelenkhebels 25 ist über einen zweiten Querstift 27 zwischen zwei parallelen Schenkeln 28 an einem hinteren freien Ende eines winkelförmigen zweiten Gabelstücks 29 gelenkig angeordnet. Das zweite Gabelstück 29 ist über einen dritten Querstift 30 verschwenkbar an einem Lagerbock 31 angeordnet, der an dem Gehäuse 1 seitlich befestigt ist. Auf dem zweiten Gabelstück 29 ist der Spannarm 3 festgeschraubt. Dieser enthält an seinem vorderen Ende eine schlitzförmige Öffnung, in die der Aufnahmestift 5 in der Spannstellung eingreift. Durch die beiden Gabelstücke 22, 29 und den Gelenkhebel 25 wird ein Hebelgetriebe gebildet, durch das der Spannarm 3 über den Linearantrieb 4 zwischen seiner Offen- und Spannstellung verschwenkt werden kann.

Die seitliche Aussparung 23 des Gehäuses 1 wird an dessen Außenseite durch ein Abdeckblech 32 abgedeckt, das über eine Durchgangsöffnung mit dem ersten Gabelstück 22 verbunden und zwischen zwei seitlichen Führungen 33 verschiebbar geführt ist. In dem Gehäuse 1 ist ferner ein Sensor 34 zur Werkstückerkennung untergebracht. Durch diesen Sensor kann erfaßt werden, ob sich ein Werkstück innerhalb der Spannvorrichtung befindet.

Die vorstehend beschriebene Spannvorrichtung funktioniert wie folgt:

Bei der in Figur 1 gezeigten Einlegeposition der Spannvorrichtung befindet sich der Spannarm 3 in einer Offenstellung und der Aufnahmestift 1 steht nur mit seiner konischen Spitze von der plattenförmigen Auflage 2 vor. In dieser Stellung kann ein Werkstück eingelegt werden, wobei die konische Spitze des Aufnahmestifts 5 in eine entsprechende Bohrung des Werkstücks eingreifen kann und eine Zentrierfunktion zur ordnungsgemäßen Positionierung des Werkstücks übernimmt.

Wenn das Werkstück eingelegt ist, kann die Kolbenstange 6 mit Hilfe des Handhebels 9 manuell aus der in Figur 1 gezeigten unteren Stellung in die gemäß Figur 2 dargestellte obere Stellung verschoben werden, wobei der Spannarm 3 über das Hebelgetriebe aus seiner Offenstellung in die Spannstellung verschwenkt wird. Gleichzeitig fährt auch der Aufnahmestift 5 aus und gelangt in die gemäß Figur 2 dargestellte Haltestellung. Dann kann der Pneumatikzylinder derart beaufschlagt werden, dass die Kolbenstange 6 nach oben gedrückt wird, wodurch die eigentliche Spannkraft erzeugt wird. Aus Sicherheitsgründen ist vorgesehen, dass der Pneumatikzylinder erst dann betätigt werden kann, wenn der Sensor 34 die ordnungsgemäße Lage des Werkstücks auf der Auflage 2 signalisiert.

Zum Öffnen der Spannvorrichtung wird der Pneumatikzylinder entsprechend umgesteuert, so dass die Kolbenstange 6 nach unten fährt. Dadurch wird der Spannarm 3 wieder in seine Offenstellung verschwenkt und der Haltestift 5 fährt gleichzeitig ein. Das Werkstück liegt dann wieder frei und kann ohne Verspannung entnommen werden.

Die Erfindung wird durch die Ansprüche definiert, ist jedoch nicht auf das in den Figuren gezeigte und vorstehend beschriebene Ausführungsbeispiel beschränkt. So kann z.B. anstelle des beschriebenen Linearantriebs mit manueller und pneumatischer Betätigung auch ein anderer Antrieb zur gleichzeitigen Betätigung des Spannarms und des Haltestifts oder eines anderen geeigneten Halteelements vorgesehen sein. Die Spannvorrichtung kann außerdem auch mehrere Spannarme und Aufnahmestifte aufweisen.

## Patentansprüche

1. Spannvorrichtung mit einer auf einem Gehäuse (1) angeordneten Werkstückauflage (2), mindestens einem Spannarm (3) zum Festspannen des Werkstücks auf der Werkstückauflage (2) und einem Antrieb zur Bewegung des Spannarms (3) zwischen einer Offenstellung und einer Spannstellung, wobei der Antrieb als Linearantrieb (4) ausgebildet ist, der mit dem mindestens einen Spannarm (3) über ein Hebelgetriebe (22, 25, 29) und mit mindestens einem beweglichen Aufnahmestift (5) zur lagegenauen Positionierung des Werkstücks derart verbunden ist, dass durch Betätigung des Linearantriebs (4) der Spannarm (3) aus seiner Offenstellung in die Spannstellung und zurück verschwenkbar und gleichzeitig der Aufnahmestift (5) aus einer Einlegestellung in eine Haltestellung bzw. zurück bewegbar ist, **dadurch gekennzeichnet, dass** das Hebelgetriebe (22, 25, 29) ein durch den Linearantrieb (4) verschiebbares erstes Gabelstück (22) und ein an der Außenseite des Gehäuses (1) verschwenkbar angelenktes zweites Gabelstück (29) enthält, die durch einen Gelenkhebel (25) gelenkig miteinander verbunden sind, wobei der Spannarm (3) an dem zweiten Gabelstück (29) befestigt ist..

2. Spannvorrichtung nach Anspruch 1, **dadurch gekennzeichnet, dass** der Aufnahmestift (5) durch den Linearantrieb (4) zwischen einer eingefahrenen Einlegestellung und einer ausgefahrenen Haltestellung verschiebbar ist.

3. Spannvorrichtung nach Anspruch 1 oder 2, **dadurch gekennzeichnet, dass** der Aufnahmestift (5) an einem innerhalb des Gehäuses (1) verschiebbar geführten Führungsbolzen (19) angeordnet ist.

4. Spannvorrichtung nach einem der Ansprüche 1 bis 3, **dadurch gekennzeichnet, dass** das erste Gabelstück (22) durch eine seitliche Aussparung (23) des Gehäuses (1) nach außen vorsteht.

5. Spannvorrichtung nach Anspruch 4, **dadurch gekennzeichnet, dass** die seitliche Aussparung (23) durch eine mit dem ersten Gabelstück (22) verschiebbare Abdeckung (32) abgedeckt wird.

6. Spannvorrichtung nach einem der Ansprüche 1 bis 5, **dadurch gekennzeichnet, dass** der Linearantrieb (4) einen druckmittelbetätigten Zylinder, vorzugsweise einen Pneumatikzylinder (6, 7), mit einer durchgehenden Kolbenstange (6) enthält.

7. Spannvorrichtung nach Anspruch 6, **dadurch gekennzeichnet, dass** das eine Ende der Kolbenstange (6) mit dem Hebelgetriebe (22, 25, 29) und dem Aufnahmestift (5) und das andere Ende der Kolbenstange (6) mit einem Handhebel (9) zur manuellen Verschiebung der Kolbenstange (6) verbunden ist.

8. Spannvorrichtung nach Anspruch 7, **dadurch gekennzeichnet, dass** der Handhebel (9) an einer an der Unterseite eines Zylindergehäuses (7) befestigten Platte (8) verschwenkbar angelenkt ist.

9. Spannvorrichtung nach einem der Ansprüche 1 bis 8, **dadurch gekennzeichnet, dass** in dem Gehäuse (1) ein Sensor (34) zur Werkstückerkennung angeordnet ist.

## Claims

1. Clamping device with a workpiece support (2) arranged on a housing (1), at least one clamping arm (3) for clamping the workpiece securely on the workpiece support (2) and a drive for moving the clamping arm (3) between an open position and a clamping position, the drive being embodied as a linear drive (4) which is connected to the at least one clamping arm (3) by means of a lever mechanism (22, 25, 29) and to at least one movable mounting pin (5) for precise positioning of the workpiece such that through actuation of the linear drive (4) the clamping arm (3) can be swivelled out of its open position into the clamping position and back and at the same time the mounting pin (5) can be moved out of an inserting position into a holding position and back, **characterised in that** the lever mechanism (22, 25, 29) comprises a first forked piece (22) which can be displaced by the linear drive (4) and a second forked piece (29) which is articulated pivotably to the outside of the housing (1), which [forked pieces] are connected together by a linking lever (25) so that they can articulate, the clamping arm (3) being fastened to the second forked piece (29).

2. Clamping device according to claim 1, **characterised in that** the mounting pin (5) can be displaced by the linear drive (4) between a retracted inserting position and an extended holding position.

3. Clamping device according to claim 1 or 2, **characterised in that** the mounting pin (5) is arranged on a guide bolt (19) which is guided displaceably inside the housing (1).

4. Clamping device according to one of claims 1 to 3, **characterised in that** the first forked piece (22) protrudes to the exterior through a lateral opening (23) in the housing (1).

5. Clamping device according to claim 4, **characterised in that** the lateral opening (23) is covered by a cover (32) which can be displaced with the first forked piece (22).

6. Clamping device according to one of claims 1 to 5, **characterised in that** the linear drive (4) comprises a cylinder operated by means of a pressure medium, preferably a pneumatic cylinder (6, 7), with a piston rod (6) passing through it.

7. Clamping device according to claim 6, **characterised in that** one end of the piston rod (6) is connected to the lever mechanism (22, 25, 29) and the mounting pin (5) and the other end of the piston rod (6) is connected to a hand-operated lever (9) for manual displacement of the piston rod (6).

8. Clamping device according to claim 7, **characterised in that** the hand-operated lever (9) is articulated pivotably to a plate (8) fastened to the underside of a cylinder housing (7).

9. Clamping device according to one of claims 1 to 8, **characterised in that** a sensor (34) for recognising the workpiece is arranged in the housing (1).

## Revendications

1. Dispositif de serrage présentant un support de pièce (2) disposé sur un boîtier (1), au moins un bras de serrage (3) pour bloquer par serrage la pièce sur le support de pièce (2) et un entraînement pour déplacer le bras de serrage (3) entre une position ouverte et une position de serrage, l'entraînement étant réalisé comme un entraînement linéaire (4) qui est relié à l'au moins un bras de serrage (3) par le biais d'un mécanisme à levier (22, 25, 29) et à au moins une goupille de position (5) mobile pour positionner exactement la pièce de telle sorte qu'en actionnant l'entraînement linéaire (4), le bras de serrage (3) puisse pivoter de sa position ouverte à la position de serrage et inversement et la goupille de position puisse se déplacer en même temps d'une position d'insertion à une position de retenue ou inversement, **caractérisé en ce que** le mécanisme à levier (22, 25, 29) contient une première chape (22) pouvant se déplacer par l'entraînement linéaire (4) et une seconde chape (22) articulée de manière pivotante sur le côté extérieur du boîtier (1), lesquelles sont reliées entre elles de manière articulée par un levier articulé (25), le bras de serrage (3) étant fixé sur la seconde chape (29).

2. Dispositif de serrage selon la revendication 1, **caractérisé en ce que** la goupille de position (5) peut être déplacée par l'entraînement linéaire (4) entre une position d'insertion rentrée et une position de retenue déployée.

3. Dispositif de serrage selon la revendication 1 ou 2, **caractérisé en ce que** la goupille de position (5) est disposée sur un boulon de guidage (19) guidé de manière mobile à l'intérieur du boîtier (1).

4. Dispositif de serrage selon l'une quelconque des revendications 1 à 3, **caractérisé en ce que** la première chape (22) dépasse vers l'extérieur par un évidement (23) latéral du boîtier (1).

5. Dispositif de serrage selon la revendication 4, **caractérisé en ce que** l'évidement (23) latéral est recouvert par un recouvrement (32) mobile avec la première chape (22).

6. Dispositif de serrage selon l'une quelconque des revendications 1 à 5, **caractérisé en ce que** l'entraînement linéaire (4) contient un cylindre actionné par fluide sous pression, de préférence un vérin pneumatique (6, 7) avec une tige de piston (6) continue.

7. Dispositif de serrage selon la revendication 6, **caractérisé en ce qu'**une extrémité de la tige de piston (6) est reliée au mécanisme à levier (22, 25, 29) et à la goupille de position (5) et l'autre extrémité de la tige de piston (6) est reliée à un levier à main (9) servant à déplacer manuellement la tige de piston (6).

8. Dispositif de serrage selon la revendication 7, **caractérisé en ce que** le levier à main (9) est articulé de manière pivotante sur une plaque (8) fixée sur le côté inférieur d'un boîtier de cylindre (7).

9. Dispositif de serrage selon l'une quelconque des revendications 1 à 8, **caractérisé en ce qu'**un capteur (34) servant à détecter la pièce est disposé dans le boîtier (1).
